# EUROPÄISCHE PATENTANMELDUNG

(11) **EP 1 738 822 A1**
(43) Veröffentlichungstag der Anmeldung: **03.01.2007**
(21) Anmeldenummer: 06011723.1
(22) Anmeldetag: 07.06.2006
(51) Int. Cl.: B01J 29/00, B01J 35/00

(54) **Katalysatormaterial mit gesteigerter Reaktionseffizienz**

(30) Priorität: 28.06.2005 DE 102005030473
(71) Anmelder: Forschungszentrum Jülich GmbH, 52425 Jülich (DE)
(72) Erfinder: Brzank, Andreas, D-58540 Meinerzhagen (DE); Schütz, Gunter M.,, D-52428 Jülich (DE)

(57) **Zusammenfassung**

Ein Katalysatormaterial weist eine neuartige innere Struktur auf, die die Ströme von Edukten A und Produkten B voneinander trennt (Molecular Traffic Control) und zugleich die Abfuhr des Produkts B optimiert. Dadurch werden Stauungen von Produkt B im Inneren des Materials, die bei Katalysatormaterialien nach dem Stand der Technik der begrenzende Faktor für die Reaktionseffizienz sind, weitestgehend vermieden. Dadurch wird das Konzept der Molecular Traffic Control erstmals für Materialien nutzbar, die in Körnern der Größenordnung einiger Mikrometer vorliegen.

## Beschreibung

Die Erfindung betrifft ein Katalysatormaterial, das eine verbesserte Effizienz für die Katalyse aufweist.

### Stand der Technik

Ein Katalysator stellt für die chemische Reaktion eines Edukts A zu einem Produkt B einen alternativen Weg bereit, der eine wesentlich geringere Aktivierungsenergie erfordert als der nicht katalytisch unterstützte, natürliche Reaktionsweg. Der Katalysator bewirkt, dass die Reaktion bei wesentlich geringeren Temperaturen und/oder Drücken stattfinden kann als auf dem natürlichen Reaktionsweg.

Als Katalysatoren sind aus (Jens Weitkamp et al., "Formselektive Katalyse in Zeolithen", Chemie-Ingenieur-Technik 58, 623-632 (1986)) Zeolithe bekannt. Dabei handelt es sich um kristalline Aluminosilikate bestehend aus SiO₄₋ und AlO⁻₄₋ Tetraedern, die durch gemeinsame Sauerstoffatome zu einem regelmäßigen dreidimensionalen Netzwerk verknüpft sind. Diese Kristalle zeichnen sich dadurch aus, dass sie von einem regelmäßig angeordneten dreidimensionalen Netzwerk aus identischen Poren durchzogen sind, wobei sich bei vielen Zeolithen an Kreuzungspunkten von Poren Kavernen bilden. Sie wurden in den 1960er Jahren als Crackkatalysatoren für die Raffinerietechnik eingeführt, wo sie wie eine Säure wirken und die Aufspaltung komplexer Kohlenwasserstoffketten in kürzere Ketten unterstützen. Nachteilig ist ihre Reaktionseffizienz häufig nicht ausreichend.

Üblicherweise liegen großtechnisch produzierte Zeolithe für die Katalyse in Form von Körnern der Größenordnung einiger Mikrometer vor.

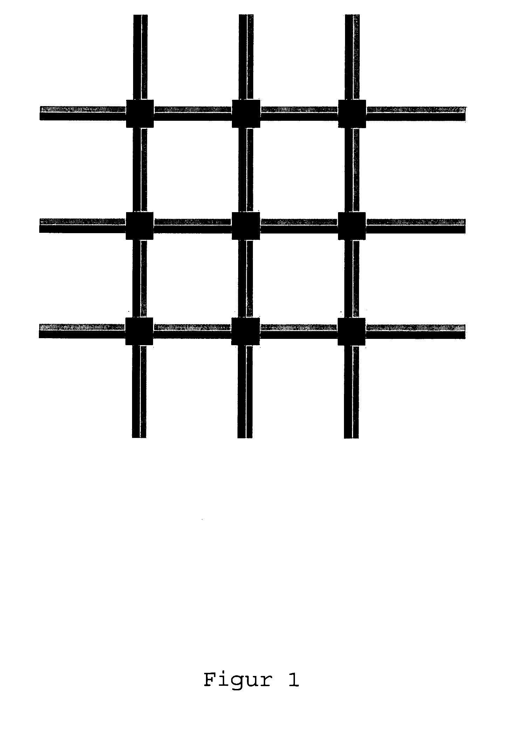

Die Reaktionseffizienz eines Zeolithkatalysators (und damit die Ausbeute an Produktmolekülen) wird maßgeblich durch die Eigenschaften der Diffusionsprozesse von Edukten A und Produkten B innerhalb des Zeolithen bestimmt (Danny Schuring: "Diffusion in Zeolites: Towards a Microscopic Understanding", Dissertation Technische Universität Eindhoven, ISBN 90-386-2624-X (2002)). Bei Katalysatoren nach dem Stand der Technik werden sowohl die Edukte A als auch die Produkte B durch die gleichen Poren transportiert. Eine solche Struktur ist modellhaft in Figur 1 skizziert, wobei Ströme von Edukten A durch dunkelgraue Linien, Ströme von Produkten B durch hellgraue Linien und Orte, an denen eine katalytische Reaktion von A zu B stattfindet, als schwarze Quadrate dargestellt sind. Da die Poren quasi eindimensionale Kanäle sind, können sich in ihnen verschiedene Moleküle weder überholen noch in entgegengesetzten Richtungen aneinander vorbeibewegen ("single-file diffusion"). Der Kontakt zwischen dem Katalysator und den Edukten A, der sich nach der Verweildauer der Edukte A im Kristall bemisst, wird somit durch gegenseitige Blockade von Edukten A und Produkten B verschlechtert. Durch damit verbundene erhebliche Zunahme der Verweildauer der Moleküle nimmt die Effektivität des Katalysators ab, und es wird weniger Produkt B gebildet.

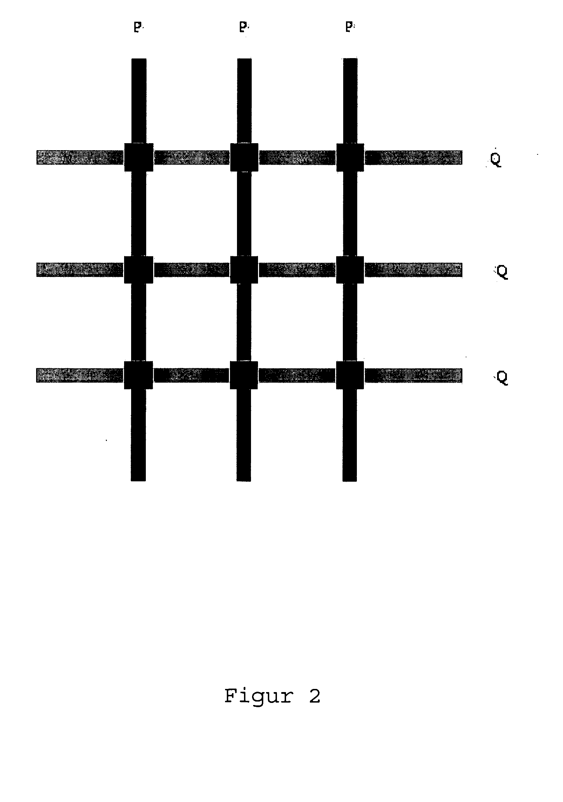

Aus (E. G. Derouane, Z. Gabelica, Journal of Catalysis 64, 486 (1980)) sowie aus (A. Brzank, G. Schütz: "Molecular Traffic Control in Porous Nanoparticles", arXiv: condmat/0503068) ist das Konzept der Molecular Traffic Control (MTC) bekannt. Hierbei wird die Formselektivität der Poren in Zeolithen ausgenutzt, um Edukte A und Produkte B auf räumlich getrennten Wegen in den Zeolithen hinein- bzw. aus ihm herauszuführen. Dadurch bewegt sich in einer gegebenen Pore immer nur eine Molekülart, was zu einer Trennung der Ströme von A und B führt und wodurch die gegenseitige Behinderung der Diffusion von Edukt A und Produkt B unterdrückt wird. Eine solche Struktur ist modellhaft in Figur 2 skizziert. Nachteilig geht die Reaktionseffizienz eines solchen Katalysators in den meisten anwendungsrelevanten Fällen nicht über die eines Katalysators hinaus, der der "single-file diffusion" mit gegenseitiger Behinderung unterliegt.

### Aufgabe und Lösung

Aufgabe der Erfindung ist daher, ein Katalysatormaterial zur Verfügung zu stellen, das eine höhere Reaktionseffizienz aufweist als Katalysatormaterialien nach dem Stand der Technik. Weitere Aufgaben der Erfindung sind, einen Katalysator mit einem Katalysatormaterial sowie ein Verfahren zur Herstellung eines Katalysatormaterials zur Verfügung zu stellen.

Diese Aufgaben werden erfindungsgemäß gelöst durch ein Katalysatormaterial gemäß Hauptanspruch sowie einen Katalysator und ein Herstellungsverfahren gemäß Nebenansprüchen. Weitere vorteilhafte Ausgestaltungen der Erfindung ergeben sich aus den darauf rückbezogenen Unteransprüchen.

### Gegenstand der Erfindung

Gemäß Hauptanspruch ist das Katalysatormaterial durchzogen von Poren des Typs P und Poren des Typs Q, wobei es Kreuzungspunkte zwischen Poren des Typs P und Poren des Typs Q gibt. Außerdem weist die Porenstruktur des Typs Q Verzweigungen auf.

Unter Poren des Typs P werden solche Poren verstanden, die für das Edukt A durchlässig sind. Unter Poren des Typs Q werden solche Poren verstanden, die für das Produkt B durchlässig und für das Edukt A undurchlässig sind. Unter Verzweigungen sind Punkte zu verstehen, an denen sich das Produkt B in mehr als einer Raumdimension bewegen, d. h. neben der Bewegung entlang einer Pore einen alternativen Weg einschlagen kann.

Im Rahmen der Erfindung wurde erkannt, dass dem Produkt B am Orte seiner katalytischen Erzeugung aus dem Edukt A mit Hilfe der Verzweigungen verschiedene Wege für die Diffusion eröffnet werden. Dadurch erhält das Produkt B die Möglichkeit, auf dem kürzestmöglichen Wege in Richtung der Oberfläche des Katalysatormaterials zu diffundieren. Da die Poren des Typs Q auf das Produkt B selektiv sind, wird das Produkt B auf dem Weg zur Oberfläche nicht durch einströmende Edukte A behindert. Je schneller das Produkt B vom Ort seiner Entstehung abtransportiert wird, desto früher kann am gleichen Ort eine weitere Reaktion von A nach B stattfinden. Im Ergebnis wird die Reaktionseffizienz des Katalysatormaterials durch die stark reduzierte Verweildauer der Gastmoleküle A und B erheblich verbessert. In Katalysatormaterialien mit "molecular traffic control" nach dem Stand der Technik hingegen kann sich das Produkt B immer nur eindimensional entlang einer Pore bewegen und hat daher nachteilig einen weiten Weg zurückgelegt, bevor es die Oberfläche des Materials erreicht. Dadurch entstehen Stauungen von Produkt B im Inneren des Materials, die weitere Reaktionen von A nach B unterbinden und so zum begrenzenden Faktor für die Effizienz des Katalysators werden.

Ist die Porenstruktur des Typs P zusätzlich auf das Edukt A selektiv, kann zugleich verhindert werden, dass seine Zufuhr durch das ausdiffundierende Produkt B behindert wird. Es kann jedoch auch vorteilhaft sein, die Poren des Typs P so auszugestalten, dass sie für Edukt A und Produkt B durchlässig sind. In diesem Fall können auch die Poren des Typs P für den Abtransport von B genutzt werden. Unterscheiden sich die Moleküle A und B in ihren Größen sehr stark, muss dieser Vorteil nicht durch eine gegenseitige Behinderung des Transports von Edukt A und Produkt B erkauft werden. Ein gemeinsamer Transport von A und B in den Poren des Typs P kann somit insbesondere dann vorteilhaft sein, wenn ein großes Molekül A katalytisch in viele kleine Moleküle B aufgespalten wird ("Cracken").

Weiterhin wird durch die hochporöse Struktur des erfindungsgemäßen Katalysatormaterials bei gleich bleibender Menge an Material dessen nutzbare Oberfläche maximiert. Dadurch kommt es mit dem größtmöglichen Anteil der vorhandenen Menge an Edukten A in Kontakt, so dass es effektiv genutzt wird. Dies ist insbesondere dann vorteilhaft, wenn das Katalysatormaterial sehr teuer ist.

In einer vorteilhaften Ausgestaltung der Erfindung bilden die Strukturen aus Poren der Typen P und Q jeweils ein regelmäßiges Gitter. Ein Material mit dieser Struktur lässt sich technisch besonders einfach herstellen, indem es als Kristall gezüchtet wird. Die innere Struktur ergibt sich hierbei automatisch aus der für den Kristall charakteristischen Fernordnung. Dieser Vorteil lässt sich insbesondere in einer weiteren Ausgestaltung ausnutzen, in der das Katalysatormaterial eine Zeolithstruktur aufweist. Materialien mit einer derartigen Struktur lassen sich mit seit Jahrzehnten bewährten Standardverfahren herstellen.

Vorteilhaft liegt das Katalysatormaterial in Körnern mit einer Korngröße zwischen 1 µm und 10 µm vor. Der Vorteil liegt darin, dass sich diese Korngröße verfahrenstechnisch besonders einfach und kostengünstig herstellen lässt. Im Rahmen der Erfindung sind jedoch auch kleinere Körner effizienter als Katalysatormaterialien nach dem Stand der Technik. Katalysatormaterialien mit Molecular Traffic Control nach dem Stand der Technik verlieren nachteilig bei Korngrößen jenseits einiger 10 nm bereits deutlich an Reaktionseffizienz, da es in ihnen zu Stauungen des Produkts B kommt. Im Grenzfall, dass die katalytische Reaktion äußerst wahrscheinlich ist, trägt bei diesen Materialien gar nur ein verschwindender Anteil der jeweiligen Kornoberfläche überhaupt zur Umsetzung von Edukt A zu Produkt B bei. Da es nur in Form sehr kleiner Körner überhaupt wirksam ist, ist das Katalysatormaterial nach dem Stand der Technik deutlich schwieriger und damit teurer herzustellen als das erfindungsgemäße Katalysatormaterial.

In einer weiteren vorteilhaften Ausgestaltung der Erfindung sind die Poren des Katalysatormaterials auf die Größe oder auf die Form der Eduktmoleküle A bzw. Produktmoleküle B abgestimmt. Form- und Größenselektivität der Poren können technisch einfach variiert werden, wenn das Katalysatormaterial an ein neues Edukt A bzw. ein neues Produkt B anzupassen ist. Insbesondere kann eine große Bandbreite von form- bzw. größenselektiven Poren aus den gleichen Ausgangsmaterialien hergestellt werden. Das Katalysatormaterial ist somit zugleich vielseitig verwendbar und kostengünstig herstellbar. Bei rein chemisch selektiven Katalysatoren hingegen, wie etwa Enzymen in der organischen Chemie, schließen sich vielseitige Verwendbarkeit und kostengünstige Herstellung gegenseitig aus.

In einer weiteren vorteilhaften Ausgestaltung enthält das Katalysatormaterial wenigstens eine weitere stoffselektive Porenstruktur. Damit kann das Material auch für katalytische Reaktionen verwendet werden, bei denen mehrere Edukte getrennt voneinander zugeführt bzw. mehrere Produkte getrennt voneinander abgeführt werden müssen.

Gemäß Nebenanspruch enthält ein Katalysator das erfindungsgemäße Katalysatormaterial. Dadurch weist der Katalysator bei gleicher Baugröße und gleichen Materialkosten eine deutlich höhere Reaktionseffizienz auf als Katalysatoren nach dem Stand der Technik. In einer vorteilhaften Ausgestaltung der Erfindung sind sowohl die Edukte als auch die Produkte des Katalysators Kohlenwasserstoffverbindungen. Hierbei kann es sich insbesondere um Rohöl handeln, dessen sehr komplexe Kohlenwasserstoffketten mit dem erfindungsgemäßen Katalysator zu den für Otto- oder Dieselkraftstoff benötigten kürzeren Ketten umgesetzt werden können. Auf Grund seiner verbesserten Effizienz eignet sich der Katalysator aber auch zur Gewinnung von organischen Zwischenprodukten und hoch veredelten Feinchemikalien. Gemäß Nebenanspruch lässt sich ein Katalysatormaterial mit einer Struktur aus Poren des Typs P und einer Struktur aus Poren des Typs Q herstellen, wobei Kreuzungspunkte zwischen Poren des Typs P und Poren des Typs Q sowie Verzweigungen innerhalb der Porenstruktur des Typs Q in das Material eingebracht werden. Wird das so hergestellte Katalysatormaterial verwendet, so erhält im Betrieb das Produkt B die Möglichkeit, nach seiner Entstehung auf dem kürzestmöglichen Wege in Richtung der Oberfläche des Katalysatormaterials zu diffundieren. Dadurch wird weitestgehends vermieden, dass im Katalysatormaterial Stauungen von B entstehen und weitere Reaktionen von A zu B behindern. Ein erfindungsgemäß hergestelltes Katalysatormaterial hat daher eine wesentlich größere Reaktionseffizienz als ein nach dem Stand der Technik hergestelltes Material.

In einer vorteilhaften Ausgestaltung werden hierzu mehrere Ausgangsmaterialien, die jeweils unterschiedliche Porenstrukturen ausbilden können, miteinander vermischt. Dadurch weisen die Ausgangsmaterialien vorteilhaft eine vergleichsweise einfache innere Struktur auf, so dass sie großtechnisch einfach und kostengünstig herzustellen sind. Dieses Verfahren ist speziell für die Herstellung erfindungsgemäßer Katalysatormaterialien in Form von Zeolithen vorteilhaft, da sich in einer Zeolithstruktur jeweils nur bestimmte Durchmesser und Formen der Poren ausbilden können. Auch lassen sich mit diesem Verfahren Katalysatormaterialien, die neben Poren des Typs P und Poren des Typs Q eine weitere stoffselektive Porenstruktur aufweisen, besonders einfach herstellen. Derartige Materialien können etwa verwendet werden, um mehrere in einem Gemisch vorliegende verschiedene Edukte A gleichzeitig katalytisch in ein oder mehrere unterschiedliche Produkte B umzuwandeln.

In einer weiteren Ausgestaltung der Erfindung wird das Material zerkleinert, um etwa Körner einer gewünschten Korngröße herzustellen. Hierdurch wird vorteilhaft die selbstorganisierte Fernordnung bei der Bildung von Festkörperkristallen ausgenutzt. Da diese Ordnung sich auf das gesamte vorhandene Material erstreckt, kann durch das Zerkleinern etwa eine große Menge an Körnern mit vergleichbarer innerer Struktur schnell und kostengünstig hergestellt werden.

Statt ein Katalysatormaterial erst makroskopisch herzustellen und dann zu zerkleinern, kann man es alternativ auch aus primitiven Einheitszellen zusammensetzen. Eine solche erfindungsgemäße Einheitszelle enthält hierbei mindestens einen Kreuzungspunkt zwischen Poren des Typs P und Poren des Typs Q sowie mindestens eine Verzweigung in der Porenstruktur des Typs Q. Sie kann zum Beispiel in Form eines nanoskopischen Korns vorliegen. Ein Katalysatormaterial lässt sich aus einer Vielzahl solcher Körner herstellen, beispielsweise indem diese zu größeren Körnern zusammengepresst werden.

Zwecks Herstellung eines Katalysators lassen sich die genannten Verfahren je nach Anwendungszweck in beliebiger Weise kombinieren.

### Spezieller Beschreibungsteil

Nachfolgend wird der Gegenstand der Erfindung anhand einer Figur näher erläutert, ohne dass der Gegenstand der Erfindung dadurch beschränkt wird. Es ist gezeigt:
Figur 1 (Stand der Technik): Prinzipskizze der Porenstruktur eines Katalysatormaterials, das der "single-file diffusion" mit gegenseitiger Behinderung von A und B unterliegt.
Figur 2 (Stand der Technik): Prinzipskizze der Porenstruktur eines Katalysatormaterials mit stoffselektiven Poren.
Figur 3: Prinzipskizze der Porenstruktur eines erfindungsgemäßen Katalysatormaterials.

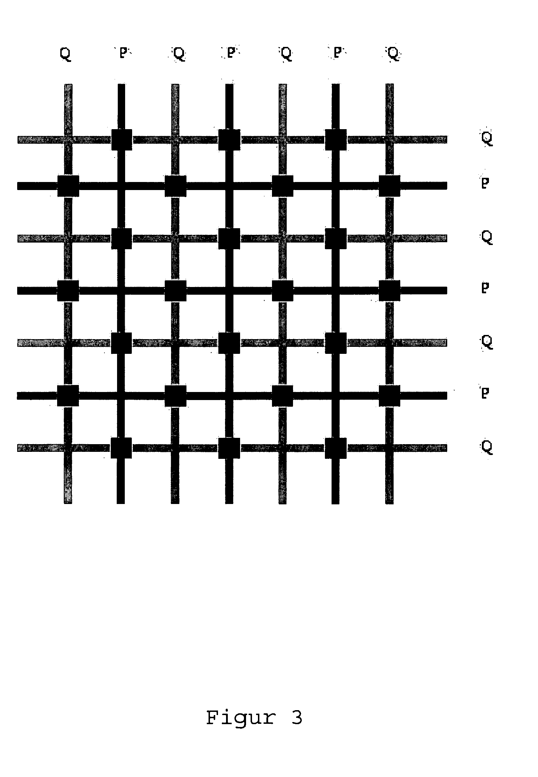

In Figur 3 ist modellhaft die binäre Porentopologie eines erfindungsgemäßen Katalysatormaterials skizziert. Die Poren der Typen P und Q bilden hier ein gemeinsames Gitter, wobei in jeder der (hier: zwei) Raumrichtungen des Gitters Poren der Typen P und Q jeweils alternierend angeordnet sind. In diesem Ausführungsbeispiel finden katalytische Reaktionen von Edukt A zu Produkt B nur an den Kreuzungspunkten zwischen Poren der Typen P und Q statt. Dem Produkt B wird unmittelbar nach seiner Entstehung an einem der Kreuzungspunkte neben weiteren Wegen der kürzestmögliche Weg zur Oberfläche des Materials angeboten. Dieser Weg verläuft im Wesentlichen antiparallel zu dem Weg, auf dem das Edukt A zum Ort der Entstehung von B gelangt ist, und führt nur über eine minimale Anzahl weiterer Kreuzungspunkte. Dadurch wird vorteilhaft der Anteil der Kreuzungspunkte, an denen auf Grund eines Überschusses an Produkt B keine weitere Reaktion von Edukt A zu Produkt B mehr erfolgen kann, deutlich vermindert. Dies wiederum nutzt die Reaktivität des Grundstoffs, aus dem das Katalysatormaterial besteht, optimal aus und erhöht so die Reaktionseffizienz des Katalysatormaterials.

Eine Struktur gemäß dem Ausführungsbeispiel lässt sich technisch beispielsweise durch Ineinanderstellen zweier Zeolith-Gitterstrukturen besonders einfach herstellen. Modellrechnungen auf der Basis der dynamischen Monte-Carlo-Methode sowie analytischer Methoden zeigen, dass sich im Vergleich zu einem der "single-file diffusion" mit gegenseitiger Behinderung von A und B unterliegenden Referenzsystem auf der Basis eines Zeolithen (Figur 1) die Reaktionseffizienz auch dann noch um 50 % steigern lässt, wenn das Material in Körnern der für die großtechnische Herstellung relevanten Größenordnung zwischen 1 µm und 10 µm vorliegt.

## Patentansprüche

1. Katalysatormaterial mit einer Struktur aus Poren des Typs P, einer Struktur aus Poren des Typs Q und Kreuzungspunkten zwischen Poren des Typs P und Poren des Typs Q,
**dadurch gekennzeichnet,**
**dass** die Porenstruktur des Typs Q Verzweigungen aufweist.

2. Katalysatormaterial nach Anspruch 1,
**dadurch gekennzeichnet,**
**dass** die Strukturen aus Poren der Typen P und Q jeweils ein regelmäßiges Gitter bilden.

3. Katalysatormaterial nach Anspruch 2,
**gekennzeichnet durch** eine Zeolithstruktur.

4. Katalysatormaterial nach einem der Ansprüche 1 bis 3, **gekennzeichnet durch** Körner mit einer Korngröße zwischen 1 µm und 10 µm.

5. Katalysatormaterial nach einem der Ansprüche 1 bis 4, **gekennzeichnet durch** auf die Größe der Eduktmoleküle und/oder Produktmoleküle abgestimmte Poren.

6. Katalysatormaterial nach einem der Ansprüche 1 bis 5, **gekennzeichnet durch** auf die Form der Eduktmoleküle und/oder Produktmoleküle abgestimmte Poren.

7. Katalysatormaterial nach einem der Ansprüche 1 bis 6 mit wenigstens einer weiteren stoffselektiven Porenstruktur.

8. Katalysatormaterial nach einem der Ansprüche 1 bis 7,
**dadurch gekennzeichnet,**
**dass** die Gitter aus Poren der Typen P und Q ein gemeinsames regelmäßiges Gitter bilden, wobei Poren des Typs P alternierend mit Poren des Typs Q angeordnet sind.

9. Katalysator, enthaltend ein Katalysatormaterial nach einem der Ansprüche 1 bis 8.

10. Katalysator nach Anspruch 9,
**gekennzeichnet durch** Kohlenwasserstoffverbindungen als Edukte und/oder Produkte.

11. Verfahren zur Herstellung eines Katalysatormaterials mit einer Struktur aus Poren des Typs P und einer Struktur aus Poren des Typs Q,
**dadurch gekennzeichnet,**
**dass** sowohl Kreuzungspunkte zwischen Poren des Typs P und Poren des Typs Q als auch Verzweigungen innerhalb der Porenstruktur des Typs Q in das Material eingebracht werden.

12. Verfahren nach Anspruch 11,
**dadurch gekennzeichnet,**
**dass** mehrere Materialien miteinander vermischt werden, die unterschiedliche Porenstrukturen ausbilden können.

13. Verfahren nach einem der Ansprüche 11 bis 12,
**dadurch gekennzeichnet,**
**dass** das Material zerkleinert wird.

14. Einheitszelle mit einer Struktur aus Poren des Typs P und einer Struktur aus Poren des Typs Q,
**gekennzeichnet durch** mindestens einen Kreuzungspunkt zwischen Poren des Typs P und Poren des Typs Q sowie **durch** mindestens eine Verzweigung innerhalb der Porenstruktur des Typs Q.

15. Verfahren zur Herstellung eines Katalysatormaterials,
**dadurch gekennzeichnet,**
**dass** das Katalysatormaterial aus Einheitszellen gemäß Anspruch 14 aufgebaut wird.

16. Verfahren zur Herstellung eines Katalysators mit einem Verfahren nach den Ansprüchen 11 bis 13 sowie 15.
